# EUROPÄISCHE PATENTSCHRIFT

(11) **EP 3 094 874 B1**
(45) Veröffentlichungstag und Bekanntmachung des Hinweises auf die Patenterteilung: **27.06.2018**
(21) Anmeldenummer: 14825083.0
(22) Anmeldetag: 20.11.2014
(51) Int. Cl.: F16C 33/10, F16C 29/04

(54) **ANORDNUNG MIT ZUMINDEST EINER AUF EINEM ACHSBOLZEN DREHBAR GELAGERTEN ROLLE**
ARRANGEMENT COMPRISING AT LEAST ONE ROLL ROTATABLY MOUNTED ON A PIVOT PIN
DISPOSITIF COMPRENANT AU MOINS UN GALET MONTÉ ROTATIF SUR UN AXE

(30) Priorität: 14.01.2014 AT 132014 U
(43) Veröffentlichungstag der Anmeldung: 23.11.2016
(73) Patentinhaber: Fulterer AG & Co KG, 6890 Lustenau (AT)
(72) Erfinder: RAID, Karl, 6914 Hohenweiler (AT)
(74) Vertreter: Fechner, Thomas
(86) Internationale Anmeldenummer: PCT/AT2014/000206
(87) Internationale Veröffentlichungsnummer: WO 2015/106301

(56) Entgegenhaltungen:
- EP-A1- 1 469 050
- EP-A1- 2 426 190
- EP-B1- 2 074 909
- US-A1- 2006 251 348

## Beschreibung

Die vorliegende Erfindung betrifft eine Ausziehführung für bewegliche Möbelteile, insbesondere für Schubladen, mit zumindest zwei relativ zueinander verschiebbar in- oder aneinander gelagerten Schienen, wobei die Ausziehführung zumindest eine Anordnung mit zumindest einer auf einem Achsbolzen drehbar gelagerten Rolle aufweist, und der Achsbolzen der zumindest einen Anordnung an einer der Schienen angeordnet ist, wobei zwischen dem Achsbolzen und der Rolle zumindest eine Schmierschicht zur Herabsetzung der Reibung zwischen dem Achsbolzen und der Rolle angeordnet ist.

Anordnungen mit zumindest einer auf einem Achsbolzen drehbar gelagerten Rolle sind in einer Vielzahl von Ausgestaltungsformen und Anwendungsbereichen bekannt. Die Rolle ist auf dem Achsbolzen drehbar gelagert und kann so um ihre Rotationsachse relativ zum Achsbolzen gedreht bzw. rotiert werden. Eingesetzt werden solche Anordnungen z.B. in Ausziehführungen für bewegliche Möbelteile, insbesondere für Schubladen, um nur eines von vielen möglichen Einsatzgebieten zu nennen. Eine Ausziehführung für bewegliche Möbelteile, bei der die Schienen der Ausziehführung über Rollen relativ zueinander verschiebbar sind und die Rollen auf Achsbolzen rotierbar gelagert sind, ist z.B. aus der EP 2 074 909 B1 bekannt, um hier ein Beispiel zu nennen. Um die Reibung zwischen Achsbolzen und Rolle möglichst niedrig zu halten, ist es bekannt, zwischen Achsbolzen und Rolle eine Schmierschicht aus Öl vorzusehen. Ein Problem ist dabei, dass es manchmal beim Einsatz der Anordnung dazu kommt, dass das Öl der Schmierschicht auf die Abrollfläche der Rolle gelangt. Hierdurch kann es zu einem Durchrutschen der Rolle oder anderen negativen Beeinträchtigungen der Funktionsfähigkeit der Anordnung oder technischer Geräte, in welchen die Anordnung zum Einsatz gebracht wird, kommen. Insbesondere tritt dieses Problem dann auf, wenn derartige Anordnungen in Ausziehführungen für bewegliche Möbelteile, insbesondere für Schubladen eingesetzt werden, bei denen die Rollen auf Schienen der Ausziehführung laufen. Tropft das Öl auf die Schienen, so kann es zum ungewünschten Durchrutschen der Rolle und damit zur Fehlfunktion in der Ausziehführung kommen.

Aufgabe der Erfindung ist es, eine Ausziehführung der oben genannten Art dahingehend zu verbessern, dass dieses Problem möglichst vermieden ist.

Zur Lösung dieser Aufgabe schlägt die vorliegende Erfindung vor, dass die Schmierschicht aus einem Gleitlack besteht.

Durch die Schmierschicht in Form eines Gleitlackes wird eine Trockenschmierung erreicht, bei der keine flüssigen Bestandteile abtropfen können. Der Gleitlack ist vorzugsweise ausgehärtet. Durch den Gleitlack kann somit eine deutliche Reduzierung bzw. Herabsetzung der Reibung zwischen Achsbolzen und Rolle erreicht werden, ohne dass man Gefahr läuft, durch austropfendes Öl die Funktionsfähigkeit der Ausziehführung zu gefährden. Bei erfindungsgemäßer Verwendung einer Schmierschicht aus Gleitlack kann es im Laufe des Betriebs der Anordnung sogar noch zu einer Verbesserung der Schmierwirkung dieser Trockenschmierung kommen, z.B. wenn durch den Betrieb der Gleitlack oder Teile des Gleitlacks, insbesondere der weiter hinten noch genannte Festschmierstoff, auf die mit der Schmierschicht zusammenwirkenden Flächen des korrespondieren Partners der Anordnung übertragen werden und dort anhaften. So kann z.B. eine auf der Rolle als Gleitlack aufgetragene bzw. fixierte Schmierschicht mit der Zeit zum Teil auf den Achsbolzen übertragen werden, etc.

Der Vollständigkeit halber wird darauf hingewiesen, dass zusätzlich zum Gleitlack auch noch weitere Schmierschichten vorgesehen sein können, z.B. eine zweite Gleitlackschicht oder ein anderes Gleitmittel. Oft reicht aber eine einzige Schmierschicht in Form eines Gleitlackes aus. Die Schmierschicht in Form eines Gleitlacks kann z.B. auf dem Achsbolzen aufgetragen, vorzugsweise fixiert, sein. In diesem Sinne kann der Gleitlack auf zumindest einer Rollenführungsfläche des Achsbolzens, auf der die Rolle läuft, und/oder auf zumindest einer, die Rolle seitlich führenden Führungswand des Achsbolzens aufgetragen, vorzugsweise fixiert, sein. Die Führungswand kann Teil des Achsbolzens oder auch ein an sich separates, z.B. am Achsbolzen befestigtes, Bauteil oder z.B. auch Teil zumindest einer Schiene einer Ausziehführung sein. Es ist aber genauso gut möglich, dass der Gleitlack auf der Rolle aufgetragen, vorzugsweise fixiert, ist. So kann der Gleitlack z.B. auf einer Achsbolzenaufnahmelauffläche der Rolle, mit der die Rolle auf dem Achsbolzen drehbar gelagert ist, und/oder auf einer Achsbolzenaufnahmelauffläche der Rolle, mit der die Rolle an einer Führungswand entlang läuft, aufgetragen, vorzugsweise fixiert sein. Es kann auch vorgesehen sein, dass sowohl an der Rolle als auch am Achsbolzen als auch an der zumindest einen Führungswand eine entsprechende Schmierschicht aus Gleitlack aufgetragen, vorzugsweise fixiert, ist. Eine Fixierung des Gleitlackes auf dem entsprechenden Untergrund kann z.B. dadurch erfolgen, dass der Gleitlack beim Aushärten mit dem entsprechenden Untergrund eine dauerhaft haltbare Haftverbindung eingeht.

Die Anordnung kann als vormontierte Einheit aus Achsbolzen und Rolle vorliegen, um dann in eine Ausziehführung für bewegliche Möbelteile eingebaut zu werden.

Günstigerweise ist vorgesehen, dass der Gleitlack zumindest einen Festschmierstoff und zumindest ein, vorzugsweise ausgehärtetes, Bindemittel aufweist. Als Festschmierstoff kommen z.B. MoS2 (Molybdändisulfid), Graphit oder PTFE (Polytetrafluorethylen) in Frage. Als Bindemittel kann man z.B. Epoxidharz, Polyurethanharz, Amid-Imid-Harz oder Silikonharz verwenden. All dies um nur einige Beispiele zu nennen. Der Gleitlack kann zusätzlich auch zumindest ein weiteres Additiv, z.B. zum Korrosionsschutz und/oder zur Konservierung, z.B. des Materials der Rolle oder des Achsbolzens aufweisen. Als Additive können auch Farbstoffe oder dergleichen zugesetzt sein.

Bevorzugte Ausgestaltungsformen der Erfindung sehen vor, dass die Rolle und/oder der Achsbolzen Kunststoff und/oder Gummi und/oder Metall, vorzugsweise Stahl, aufweist oder daraus besteht. Auch die Führungswände können, soweit vorhanden, z.B. aus zumindest einem dieser Materialien bestehen oder zumindest eines dieser Materialien aufweisen.

Vorzugsweise ist der Achsbolzen der zumindest einen Anordnung an einer der Schienen fixiert.

Erfindungsgemäße Ausziehführungen können z.B. zwei oder drei relativ zueinander verschiebbare Schienen aufweisen. Die Schienen sind günstigerweise jeweils über die Rollen der Anordnung ineinander und/oder aneinander verschiebbar gelagert. Zum Einbau eines beweglichen Möbelteils, wie z.B. einer Schublade, in einen Möbelkorpus können zwei solcher Ausziehführungen vorgesehen sein. Bei jeder dieser Ausziehführungen kann eine zum bewegbaren Möbelteil hin gerichtete Schiene, z.B. in Form einer Ladenschiene, am beweglichen Möbelteil befestigt und eine nach außen weisende Schiene, z.B. in Form einer Korpusschiene, am Möbelkorpus befestigt sein. Zwischen diesen Schienen kann pro Ausziehführung auch noch zumindest eine weitere Schiene, z.B. in Form einer Mittelschiene, vorgesehen sein.

Bevorzugt ist vorgesehen, dass die Rolle der Anordnung an zumindest einer der Schienen reibschlüssig und/oder schlupffrei entlang rollbar ist. Besonders bevorzugt werden die Rollen erfindungsgemäßer Anordnungen in Ausziehführungen als Differentialrollen eingesetzt. Hierbei kann vorgesehen sein, dass die Rolle der Anordnung eine Differentialrolle zur Zwangskopplung der Bewegung von zumindest zwei Schienen der Ausziehführung ist. Die Differentialrollen stellen sicher, dass bei einer Bewegung einer der Schienen um eine Wegstrecke die zumindest eine jeweils andere Schiene der Ausziehführung ebenfalls um eine entsprechende Wegstrecke bewegt wird. Differentialrollen und auch Ausziehführungen mit Differentialrollen sind an sich bekannt.

Die nachfolgend erläuterten Figuren zeigen beispielhaft eine erfindungsgemäße Ausziehführung. Dargestellt ist in:
Fig. 1 eine perspektivische Ansicht einer Anordnung aus Rolle und Achsbolzen einer erfindungsgemäßen Ausziehführung;
Fig. 2 ein Längsschnitt durch diese Anordnung aus Fig. 1;
Fig. 3 das Detail A aus Fig. 2;
Fig. 4 ein Beispiel mit zwei miteinander korrespondierenden erfindungsgemäßen Ausziehführungen und
Fig. 5 eine Mittelschiene einer der Ausziehführungen aus Fig. 4.

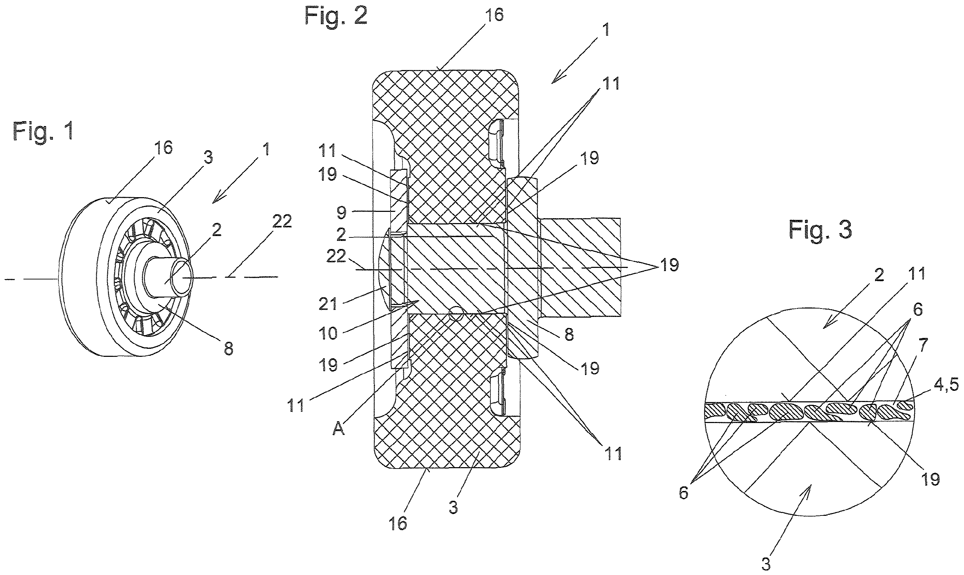

Fig. 1 zeigt eine Anordnung 1, bei der die Rolle 3 auf dem Achsbolzen 2 um die Rotationsachse 22 drehbar gelagert bzw. rotierbar ist. In Fig. 1 ist weiters eine der hier realisierten Führungswände 8 sowie die Abrollfläche 16 zu sehen. Mit dieser Abrollfläche 16 rollt die Rolle 3 auf einer Schiene 13, 14 oder 15 einer Ausziehführung 12 ab. Die Rotationsachse 22 um die sich die Rolle 3 dreht, bzw. um die sie rotiert, liegt günstigerweise wie hier auch realisiert, koaxial zum Achsbolzen 2. Fig. 2 zeigt einen Längsschnitt durch die Anordnung gemäß Fig. 1. Gut zu sehen ist hier, wie der Achsbolzen 2 durch die Achsbolzenaufnahme 10 der Rolle 3 hindurchgeführt ist. Zur seitlichen Führung der Rolle 3 auf dem Achsbolzen 2 sind in dem hier gezeigten Ausführungsbeispiel die Führungswände 8 und 9 vorgesehen. Im gezeigten Ausführungsbeispiel ist die Führungswand 8 einstückig mit dem Achsbolzen 2 ausgebildet. Die Führungswand 9 wird von einer Lochscheibe gebildet, die mittels der Befestigungsniete 21 am Achsbolzen 2 fixiert ist. Hier sind natürlich auch ganz andere Befestigungs- und Ausführungsformen für die Führungswände 8 und 9 möglich. Grundsätzlich können auch eine oder beide Führungswände 8 oder 9 weggelassen werden. Es sind auch Ausführungsformen denkbar, bei denen zumindest eine der Führungswände, welche mit einer entsprechenden Schmierschicht 4 aus Gleitlack 5 versehen sein kann, nicht Teil des Achsbolzens 2 sondern ein davon gesondertes Teil ist. Z.B. kann auch zumindest eine Schiene 13, 14 und/oder 15 einer Ausziehführung 12 eine entsprechende Führungswand, vorzugsweise mit einer Schmierschicht 4 aus Gleitlack 5, zur Führung der Rolle aufweisen bzw. ausbilden. Im gezeigten Ausführungsbeispiel weisen sowohl der Achsbolzen 2 als auch die Führungswände 8 und 9 Rollenführungsflächen 11 auf. Auf diesen Rollenführungsflächen 11 ist die Rolle 3 um ihre Rotationsachse 22 drehbar geführt. Die entsprechenden Kontaktflächen der Rolle 3, welche mit diesen Rollenführungsflächen 11 des Achsbolzens 2 bzw. der Führungswände 8 und 9 zusammenwirken bzw. in Kontakt stehen, werden hier als Achsbolzenaufnahmelaufflächen 19 bezeichnet. Erfindungsgemäß ist zwischen dem Achsbolzen 2 und der Rolle 3 zumindest eine Schmierschicht 4, welche aus einem Gleitlack 5 besteht, angeordnet. Diese Schmierschicht aus Gleitlack 5 kann sowohl auf dem Achsbolzen 2 und/oder den Führungswänden 8 und 9 als auch auf der Rolle 3 bzw. deren Achsbolzenaufnahmelaufflächen 19 aufgetragen sein. Es ist auch denkbar, sowohl auf der Rolle 3 einerseits als auch auf dem Achsbolzen 2 und/oder den Führungswänden 8 und 9 andererseits eine entsprechende Schmierschicht 4 aus Gleitlack 5 anzuordnen. Die Schmierschicht 4 aus Gleitlack 5 kann also in anderen Worten sowohl auf den Rollenführungsflächen 11 des Achsbolzens 2 bzw. der Führungswände 8 und 9 als auch auf den Achsbolzenaufnahmelaufflächen 19 der Rolle 3 aufgetragen sein.

Das in Fig. 2 mit A gekennzeichnete Detail ist in Fig. 3 vergrößert dargestellt. Hier ist die Anordnung der Schmierschicht 4 in Form des Gleitlackes 5 zwischen Achsbolzen 2 und Rolle 3 vergrößert und schematisiert gezeigt. Der Gleitlack 5 kann dabei sowohl auf der Rollenführungsfläche 11 des Achsbolzens 2 als auch auf der Achsbolzenaufnahmelauffläche 19 der Rolle 3 fixiert sein. Der Gleitlack 5 weist im gezeigten Ausführungsbeispiel die Festschmierstoffe 6 auf, welche im ausgehärteten Bindemittel 7 gebunden sind. Weitere mögliche Bestandteile des Gleitlackes, wie die eingangs genannten Additive, sind hier der Einfachheit halber nicht dargestellt.

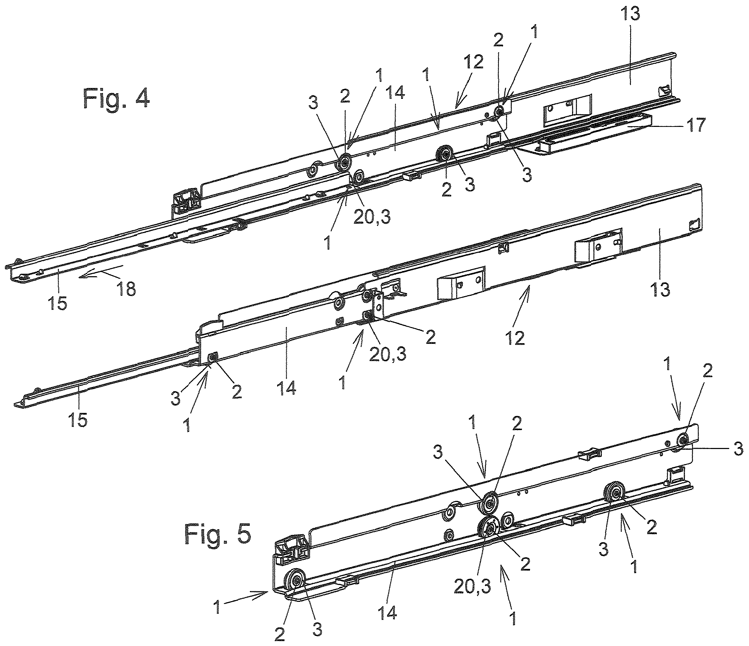

Fig. 4 zeigt beispielhaft zwei Ausziehführungen 20, mit denen ein bewegbares Möbelteil wie z.B. eine Schublade ein- uns ausziehbar in einem Möbelkorpus befestigt werden kann. Das gezeigte Beispiel der Ausziehführungen 12 ist der EP 2 074 909 B1 entnommen und dort im Detail beschrieben. Zum allgemeinen Aufbau einer Ausziehführung 12 sowie der dort realisierten Einzugsvorrichtung 17 wird auf diese Schrift verwiesen, deren Inhalt somit diesbezüglich Teil der Offenbarung dieser Erfindung ist. Im Gegensatz zur EP 2 074 909 B1 sind bei den Ausziehführungen gemäß Fig. 4 nun aber Achsbolzen 2 und Rollen 3 einer Anordnung 1 mit zumindest einer Schmierschicht 4 aus Gleitlack 5 eingesetzt. Anordnungen 1 von Achsbolzen 2 und Rolle 3 mit einer Schmierschicht 4 in Form eines Gleitlackes 5 können natürlich auch bei ganz anders gestalteten Ausziehführungen 12 verwendet werden.

Im gezeigten Ausführungsbeispiel weist jedenfalls jede der Ausziehführungen 12 jeweils drei Schienen 13, 14 und 15 auf. Die drei Schienen 13, 14 und 15 der jeweiligen Ausziehführung 12 sind über die an ihnen angeordneten Rollen 3 in- bzw. aneinander verschiebbar gelagert. Bei der Schiene 15 handelt es sich um die sogenannte Ladenschiene, an der das bewegbare Möbelteil befestigt wird. Zur Montage im bzw. am Möbelkorpus ist die Schiene 13 in Form der sogenannten Korpusschiene vorgesehen. Die zwischen den beiden Schienen 13 und 15 angeordnete Schiene 14 wird als Mittelschiene bezeichnet. Im gezeigten Ausführungsbeispiel handelt es sich um einen sogenannten Vollauszug, bei dem das bewegliche Möbelteil bzw. die Schublade in Ausziehrichtung 18 vollständig aus dem Möbelkorpus herausgezogen werden kann. Zum Wiedereinschieben des bewegbaren Möbelteils in den hier nicht gezeigten Möbelkorpus wird das hier nicht gezeigte bewegliche Möbelteil samt der Schienen entgegen der Ausziehrichtung 18 bewegt. Dies ist an sich bekannt.

Erfindungsgemäß werden bei diesen Ausziehführungen 12 nun Anordnungen 1 aus Achsbolzen 2 und Rolle 3 verwendet, bei denen zwischen dem Achsbolzen 2 und der Rolle 3 eine Schmierschicht 4 bestehend aus Gleitlack 5 angeordnet ist. Im gezeigten Ausführungsbeispiel werden ausschließlich erfindungsgemäße Anordnungen 1 aus Rolle 3 und Achsbolzen 2 verwendet. Natürlich kann die Erfindung auch nur für einzelne Anordnungen aus Rollen 3 und Achsbolzen 2 realisiert sein. Besonders günstig ist es, die Differentialrolle 20 als Teil einer erfindungsgemäßen Anordnung 1 auszubilden. Die Differentialrolle 20 sorgt, wie an sich bekannt, dafür, dass die Bewegung der Schienen 13, 14 und 15 relativ zueinander zwangsgekoppelt stattfindet. Das heißt, dass bei einer Bewegung der Schiene 15 die mittlere Schiene 14 zwangsweise ein entsprechendes Stück weit mit in Ausziehrichtung 18 herausgezogen oder in Gegenrichtung eingeschoben wird. Im gezeigten Ausführungsbeispiel ist, wie besonders gut in Fig. 5 zu sehen, der die Differentialrolle 20 tragende Achsbolzen 2 an der mittleren Schiene 14 befestigt, während die Differentialrolle 20 mit ihrer Abrollfläche 16 sowohl an der Schiene 15 als auch an der Schiene 13 abrollt. Über entsprechende Reibungswerte und Andrückkräfte wird dafür gesorgt, dass dabei kein Schlupf vorhanden ist. Dies ist an sich bekannt und muss nicht weiter erläutert werden. Die erfindungsgemäße Verwendung des Gleitlackes 5 als Schmierschicht 4 verhindert eine Beeinträchtigung des Differentiallaufes durch heraustropfendes Öl oder dergleichen.

### Legende

### zu den Hinweisziffern:

- 1: Anordnung
- 2: Achsbolzen
- 3: Rolle
- 4: Schmierschicht
- 5: Gleitlack
- 6: Festschmierstoff
- 7: Bindemittel
- 8: Führungswand
- 9: Führungswand
- 10: Achsboizenaufnahme
- 11: Rollenführungsfläche
- 12: Ausziehführung
- 13: Schiene
- 14: Schiene
- 15: Schiene
- 16: Abrollfläche
- 17: Einzugsvorrichtung
- 18: Ausziehrichtung
- 19: Achsbolzenaufnahmelauffläche
- 20: Differentialrolle
- 21: Befestigungsniete
- 22: Rotationsachse

## Patentansprüche

1. Ausziehführung (12) für bewegliche Möbelteile, insbesondere für Schubladen, mit zumindest zwei relativ zueinander verschiebbar in- oder aneinander gelagerten Schienen (13, 14, 15), wobei die Ausziehführung (12) zumindest eine Anordnung (1) mit zumindest einer auf einem Achsbolzen (2) drehbar gelagerten Rolle (3) aufweist, und der Achsbolzen (2) der zumindest einen Anordnung (1) an einer der Schienen (13, 14, 15) angeordnet ist, wobei zwischen dem Achsbolzen (2) und der Rolle (3) zumindest eine Schmierschicht (4) zur Herabsetzung der Reibung zwischen dem Achsbolzen (2) und der Rolle (3) angeordnet ist, **dadurch gekennzeichnet, dass** die Schmierschicht (4) aus einem Gleitlack (5) besteht.

2. Ausziehführung (12) nach Anspruch 1, **dadurch gekennzeichnet, dass** der Gleitlack (5) zumindest einen Festschmierstoff (6) und zumindest ein, vorzugsweise ausgehärtetes, Bindemittel (7) aufweist.

3. Ausziehführung (12) nach Anspruch 2, **dadurch gekennzeichnet, dass** der Gleitlack (5) zusätzlich zumindest ein Additiv zum Korrosionsschutz und/oder zur Konservierung aufweist.

4. Ausziehführung (12) nach einem der Ansprüche 1 bis 3, **dadurch gekennzeichnet, dass** der Gleitlack (5) auf den Achsbolzen (2) aufgetragen, vorzugsweise auf diesem fixiert, ist.

5. Ausziehführung (12) nach Anspruch 4, **dadurch gekennzeichnet, dass** der Gleitlack (5) auf zumindest einer Rollenführungsfläche (11) des Achsbolzens (2), auf der die Rolle (3) läuft, und/oder auf zumindest einer, die Rolle (3) seitlich führenden Führungswand (8, 9), vorzugsweise des Achsbolzens (2), aufgetragen, vorzugsweise fixiert, ist.

6. Ausziehführung (12) nach einem der Ansprüche 1 bis 5, **dadurch gekennzeichnet, dass** der Gleitlack (5) auf der Rolle (3) aufgetragen, vorzugsweise fixiert, ist.

7. Ausziehführung (12) nach einem der Ansprüche 1 bis 6, **dadurch gekennzeichnet, dass** die Rolle (3) und/oder der Achsbolzen (2) Kunststoff und/oder Gummi und/oder Metall, vorzugsweise Stahl, aufweist oder daraus besteht.

8. Ausziehführung (12) nach einem der Ansprüche 1 bis 7, **dadurch gekennzeichnet, dass** der Achsbolzen (2) der zumindest einen Anordnung (1) an einer der Schienen (13, 14, 15) fixiert ist.

9. Ausziehführung (12) nach einem der Ansprüche 1 bis 8, **dadurch gekennzeichnet, dass** die Rolle (3) der Anordnung (1) an zumindest einer der Schienen (13, 14, 15) reibschlüssig und/oder schlupffrei entlang rollbar ist.

10. Ausziehführung (12) nach einem der Ansprüche 1 bis 9, **dadurch gekennzeichnet, dass** die Rolle (3) der Anordnung (1) eine Differentialrolle (20) zur Zwangskopplung der Bewegung von zumindest zwei Schienen (13, 14, 15) der Ausziehführung (12) ist.

## Claims

1. A pull-out guide (12) for movable furniture parts, in particular for drawers, having at least two rails (13, 14, 15) mounted in or against one another in a manner displaceable relative to one another, wherein the pull-out guide (12) has at least one arrangement (1) with at least one roller (3) rotatably mounted on an axle pin (2), and the axle pin (2) of the at least one arrangement (1) is arranged at one of the rails (13, 14, 15), wherein at least one lubrication layer (4) for lowering the friction between the axle pin (2) and the roller (3) is arranged between the axle pin (2) and the roller (3), **characterised in that** the lubrication layer (4) consists of sliding lacquer (5).

2. A pull-out guide (12) according to claim 1, **characterised in that** the sliding lacquer (5) has at least one solid lubricant (6) and at least one, preferably cured, binder (7).

3. A pull-out guide (12) according to claim 2, **characterised in that** the sliding lacquer (5) additionally has at least one additive for corrosion protection and/or for preservation.

4. A pull-out guide (12) according to any one of claims 1 to 3, **characterised in that** the sliding lacquer (5) is applied to the axle pin (2), preferably fixed thereto.

5. A pull-out guide (12) according to claim 4, **characterised in that** the sliding lacquer (5) is applied, preferably fixed, to at least one roller guide surface (11) of the axle pin (2), upon which surface (11) the roller (3) runs, and/or to at least one guide wall (8, 9), laterally guiding the roller (3), preferably of the axle pin (2).

6. A pull-out guide (12) according to any one of claims 1 to 5, **characterised in that** the sliding lacquer (5) is applied to the roller (3), preferably fixed.

7. A pull-out guide (12) according to any one of claims 1 to 6. **characterised in that** the roller (3) and/or the axle pin (2) has or is made of plastics material and/or rubber and/or metal, preferably steel.

8. A pull-out guide (12) according to any one of claims 1 to 7, **characterised in that** the axle pin (2) of the at least one arrangement (1) is fixed to one of the rails (13, 14, 15).

9. A pull-out guide (12) according to any one of claims 1 to 8, **characterised in that** the roller (3) of the arrangement (1) can be rolled along at least one of the rails (13, 14, 15) in a friction-locked and/or slip-free manner.

10. A pull-out guide (12) according to any one of claims 1 to 9, **characterised in that** the roller (3) of the arrangement (1) is a differential roller (20) for forced coupling of the motion of at least two rails (13, 14, 15) of the pull-out guide (12).

## Revendications

1. Glissière télescopique (12) pour éléments de meuble mobiles, en particulier pour tiroirs, comprenant au moins deux rails (13, 14, 15) montés l'un dans l'autre ou l'un sur l'autre de manière à pouvoir coulisser l'un par rapport à l'autre, dans laquelle la glissière télescopique (12) comprend au moins un ensemble (1) pourvu d'au moins un galet (3) monté rotatif sur un axe (2), et l'axe (2) dudit au moins un ensemble (1) est agencé sur un des rails (13, 14, 15), dans laquelle au moins une couche de lubrifiant (4) destinée à réduire le frottement entre l'axe (2) et le galet (3) est agencée entre l'axe (2) et le galet (3), **caractérisée en ce que** la couche de lubrifiant (4) est constituée d'un vernis de glissement (5).

2. Glissière télescopique (12) selon la revendication 1, **caractérisée en ce que** le vernis de glissement (5) comprend au moins un lubrifiant solide (6) et au moins un liant (7), de préférence durci.

3. Glissière télescopique (12) selon la revendication 2, **caractérisée en ce que** le vernis de glissement (5) comprend de plus au moins un additif de protection contre la corrosion et/ou de préservation.

4. Glissière télescopique (12) selon l'une quelconque des revendications 1 à 3, **caractérisée en ce que** le vernis de glissement (5) est appliqué sur l'axe (2), de préférence fixé sur celui-ci.

5. Glissière télescopique (12) selon la revendication 4, **caractérisée en ce que** le vernis de glissement (5) est appliqué, de préférence fixé, sur au moins une surface de guidage de galet (11) de l'axe (2) sur laquelle roule le galet (3), et/ou sur au moins une paroi de guidage (8, 9), de préférence de l'axe (2), guidant latéralement le galet (3).

6. Glissière télescopique (12) selon l'une quelconque des revendications 1 à 5, **caractérisée en ce que** le vernis de glissement (5) est appliqué, de préférence fixé, sur le galet (3).

7. Glissière télescopique (12) selon l'une quelconque des revendications 1 à 6, **caractérisée en ce que** le galet (3) et/ou l'axe (2) comprend une matière plastique et/ou du caoutchouc et/ou du métal, de préférence de l'acier, ou en est constituée.

8. Glissière télescopique (12) selon l'une quelconque des revendications 1 à 7, **caractérisée en ce que** l'axe (2) dudit au moins un ensemble (1) est fixé sur un des rails (13, 14, 15).

9. Glissière télescopique (12) selon l'une quelconque des revendications 1 à 8, **caractérisée en ce que** le galet (3) de l'ensemble (1) peut rouler le long d'au moins un des rails (13, 14, 15) par friction et/ou sans glissement.

10. Glissière télescopique (12) selon l'une quelconque des revendications 1 à 9, **caractérisée en ce que** le galet (3) de l'ensemble (1) est un galet différentiel (20) pour l'accouplement forcé du mouvement d'au moins deux rails (13, 14, 15) de la glissière télescopique (12).
